# EUROPEAN PATENT SPECIFICATION

(11) **EP 4 066 218 B1**
(45) Date of publication and mention of the grant of the patent: **19.08.2026**
(21) Application number: 19816901.3
(22) Date of filing: 26.11.2019
(51) Int. Cl.: G06T 19/00

(54) **VIRTUAL CONTENT UNITS FOR EXTENDED REALITY**
VIRTUELLE INHALTSEINHEITEN FÜR DIE ERWEITERTE REALITÄT
UNITÉS DE CONTENU VIRTUEL POUR RÉALITÉ ÉTENDUE

(43) Date of publication of application: 05.10.2022
(73) Proprietor: Telefonaktiebolaget LM Ericsson (publ), 164 83 Stockholm (SE)
(72) Inventor: CALTENCO, Hector, 238 34 Oxie (SE); MCLACHLAN, Paul, San Francisco, California 94114 (US)
(74) Representative: Ericsson
(86) International application number: PCT/IB2019/060189
(87) International publication number: WO 2021/105748

(56) References cited:
- US-A1- 2014 168 262
- ANSELM HOOK: "Semantic Placement in Augmented Reality using MrEd", BLOG ENTRY, 5 September 2019 (2019-09-05), XP055707661, Retrieved from the Internet <URL:https://blog.mozvr.com/semantic-placement-in-ar/> [retrieved on 20200623]
- JONATHAN VENTURA ET AL: "Real-time Planar World Modeling for Augmented Reality", 1 January 2010 (2010-01-01), XP055113628, Retrieved from the Internet <URL:http://www.cs.ucsb.edu/~holl/pubs/Ventura-2010-ARSuperModels.pdf> [retrieved on 20140410]

## Description

### TECHNICAL FIELD

Particular embodiments relate to overlay of virtual content in an extended reality (XR) environment, and more specifically to identification of space(s) in the XR environment suitable for displaying virtual content.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Augmented reality (AR) augments the real world and its physical objects by overlaying virtual content. This virtual content is often produced digitally and may incorporate sound, graphics, and video. For example, a shopper wearing augmented reality glasses while shopping in a supermarket might see nutritional information for each object as they place it in their shopping cart. The glasses augment reality with information.

Virtual reality (VR) uses digital technology to create an entirely simulated environment. Unlike AR, which augments reality, VR immerses users inside an entirely simulated experience. In a fully VR experience, all visuals and sounds are produced digitally and do not include input from the user's actual physical environment. For example, VR may be integrated into manufacturing where trainees practice building machinery in a virtual reality before starting on the real production line.

Mixed reality (MR) combines elements of both AR and VR. In the same vein as AR, MR environments overlay digital effects on top of the user's physical environment. MR also integrates additional, richer information about the user's physical environment such as depth, dimensionality, and surface textures. In MR environments, the end user experience more closely resembles the real world. As an example, consider two users hitting a MR tennis ball on a real-world tennis court. MR incorporates information about the hardness of the surface (grass versus clay), the direction and force the racket struck the ball, and the players' height. Augmented reality and mixed reality are often used to refer the same idea. As used herein, "augmented reality" also refers to mixed reality.

Extended reality (XR) is an umbrella term referring to all real-and-virtual combined environments, such as AR, VR and MR. XR refers to a wide variety and vast number of levels in the reality-virtuality continuum of the perceived environment, consolidating AR, VR, MR and other types of environments (e.g., augmented virtuality, mediated reality, etc.) under one term.

An XR device is the device used as an interface for the user to perceive both virtual and/or real content in the context of extended reality. An XR device typically has a display that may be opaque and displays both the environment (real or virtual) and virtual content together (i.e., video see-through) or overlay virtual content through a semi-transparent display (optical see-through). The XR device may acquire information about the environment through the use of sensors (typically cameras and inertial sensors) to map the environment while simultaneously tracking the device's location within the environment.

Opportunities for displaying digital content may be bought and sold. Digital advertising is bought and sold in standard units, referred to as ad units. There are multiple kinds of ad units, including banner ads, video ads, playable ads, offerwall, etc. Each ad unit may be sold in a specific size, such as 336 by 280 pixels (large rectangle) or 300 by 250 pixels (medium rectangle). Each ad unit may be defined as two-dimensional or three-dimensional. They may also include other sensory features, such as sound, touch, smell or a user's mood. For the digital advertising ecosystem, the Interactive Advertising Bureau (IAB) standardizes ad units.

Prior to its inventory being made available for advertising, custodians of a given physical location may spatially map the interior, exterior, or both to identify possible ad units or permutations of ad units. For example, a surface that is 5 meters by 5 meters can be subdivided into multiple ad units of varying dimensions.

Object recognition in extended reality may be used to detect real world objects for triggering the digital content. For example, a consumer may look at a fashion magazine with augmented reality glasses and a video of a catwalk event may play in a video.

Sound, smell and touch are also considered objects subject to object recognition. For example, a diaper advertisement could be displayed as the sound and perhaps the mood of a crying baby is detected. Mood may be deducted from machine learning of sound data.

Advertising content may be bought and sold using real time bidding (RTB). In non-XR environments, RTB is defined as a fully automated process that facilitates buying and selling of advertising inventory. In RTB, inventory may be sold per impression and priced via auction. The auctions determine who wins the right to place an advertisement in the opportunity. The winning bidder's advertisements are then displayed nearly instantaneously.

An advertisement is a piece of creative content designed to influence consumers' perceptions of brands or causes and/or cause them to engage in a set of calls to action.

A supply-side platform (SSP) is a technology publishers use to manage advertisement inventory and receive advertisement revenue. A demand-side platform (DSP) is a system that offers demand management to buyers/advertisers. Advertisers use a DSP to look for and buy inventory from the marketplace. Demand-side platforms may also manage real-time bidding for advertisers. They may send advertisers updates about upcoming auctions.

An advertisement server is a web server that stores digital advertisements. After an RTB auction is won, the advertisement server delivers the advertisement(s) to the user application, XR environment, or website. An impression is an advertisement that has been downloaded from an advertisement server and shown to a user.

A bid request is a request for an advertisement that is triggered when a user opens a website, application, or other digital application that contains advertisement units. Each bid request contains parameters that define the inventory, such as the platform, the time of the impression, and a way to link the inventory to user data, such as an Internet protocol (IP) address, cookies, pixel tags, or ad IDs. The bid request is then transmitted into the real-time bidding ecosystem.

There currently exist certain challenges. For example, a difference between XR-enabled advertising and current digital advertising practices is incorporation of physical space into the advertising landscape. Physical space poses multiple challenges that existing infrastructure is unable to handle, such as claiming ownership over a given site or surface. Today, this problem is relatively trivial to solve: the person who has access to the application,
website, or video game's advertising server is the owner.

Physical space is different. Without a means of establishing ownership over a given location, anyone able to access a site could claim the location and begin monetizing advertisement in it. The access need not be extensive. For example, anyone able to view the side of a building from the sidewalk could "claim" it and begin placing advertisements.

The lack of a system of ownership also prevents mass adoption of XR advertisement. A given location, such as a retail store, may have a nearly infinite number of potential XR advertisement locations. Any surface, any three-dimensional division of space, could potentially support an XR advertisement. In addition, virtual advertisements could be overlaid over other physical advertisements, objects, people or signs. This creates difficulties for creatives, in that they must generate custom content for the arbitrary dimensions chosen by the host of the XR experience.

Another problem is that the lack of ad units blocks the development of real-time bidding (RTB) for XR advertisement. Today, advertisers submit bids to place their advertisements in a standardized ad unit. Each ad unit is standardized around a set of dimensions given in pixels and content type such as banner or video. Advertisers then determine how much they will pay to display their advertisement in that type of ad unit. Standard ad units, however, do not exist in XR where the size of the advertising opportunity may vary depending on a user's location and perspective with respect to the advertising opportunity.

A problem with existing solutions is that there is no mechanism to assign ad units to a physical location and claim the ad units. Moreover, existing processes to construct ad units are for two-dimensional surfaces and cannot incorporate measures of depth. Current OpenRTB standards only allow geographic location in so far as it is useful for audience targeting.

The patent publication US2014168262 dated 19-06-2014 discloses an augmented reality method wherein appropriate surfaces, onto which virtual content is augmented, are identified and wherein size, aspect ratio, position of real world objects are used as selection criteria for virtual content augmentation.

### SUMMARY

The present invention is defined the appended independent claims.

Certain embodiments may provide one or more of the following technical advantages. For example, particular embodiments incorporate AR/VR/XR inventory into the RTB ecosystem using standardized ad unit sizes and dimensions in three-dimensional space. Some embodiments assign specific poses (e.g., geographic locations and orientations) to ad units, such that impressions and return on ad spend (ROAS) can be measured. Particular embodiments assign a unique identifier to each ad unit, facilitating bidding via RTB. Some embodiments optimize ad unit pose and sizing via machine learning and AI during the spatial mapping process, and define ad unit pricing based on their geometric or projected size.

In some embodiments, using 5G, edge computing, and cloud computing can complete the spatial mapping process faster than current solutions. The architecture is scalable because it is cloud- and edge-ready. The architecture is flexible because identifying ad units may be performed using any type of device. By incorporating semantic information into spatial mapping, particular embodiments enable users to automatically block and/or allow creation of ad units on predetermined surfaces. By incorporating all three dimensions (height, width, and depth) into the definition of an ad unit, particular embodiments provide improved characterization of physical space.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates an example mapping of two flat surfaces into ad units;
FIGURE 2 illustrates an example mapping of two and three dimensional surfaces into ad units;
FIGURE 3 illustrates two three-dimensional cubes that may be defined as ad units;
FIGURE 4 is a block diagram illustrating two ad units on different floors of a structure;
FIGURE 5 illustrates a parametric definition of ad units in a spatial map, according to some embodiments;
FIGURE 6 illustrates a three-dimensional ad unit as viewed by different users and different devices, according to a particular embodiment;
FIGURE 7 is a block diagram illustrating an example extended reality (XR) end user device;
FIGURE 8 is a block diagram illustrating an example wireless network;
FIGURE 9 illustrates an example user equipment, according to certain embodiments;
FIGURE 10 is flowchart illustrating an example method in an XR system, according to certain embodiments;
FIGURE 11 is a flowchart illustrating another example method in an XR system, according to certain embodiments; and
FIGURE 12 illustrates an example virtualization environment, according to certain embodiments.

### DETAILED DESCRIPTION

Global digital advertising spend is hundreds of billions of dollars. This figure is predicted to grow rapidly, as advertisers see improved return on advertising spend (ROAS) compared to traditional media channels. Yet, very little of this money is spent on advertising in augmented reality (AR), virtual reality (VR), and extended (XR). The lack of ad unit definition and standardization means that every piece of creative content must be created from scratch. This makes advertising in AR/VR/XR prohibitively expensive for most users, reducing demand for such services.

Even when advertising agencies opt to make custom content, there is no way to systematically assign specific pieces of creative content to particular physical locations. This prevents AR/VR/XR inventory from being surfaced via real-time bidding, again increasing the price and slowing adoption of this technology.

As described above, certain challenges currently exist with digital advertising. Certain aspects of the present disclosure and their embodiments may provide solutions to these or other challenges. For example, particular embodiments spatially map physical locations and automatically identify the set of all possible ad units. A standard format for ad units may be used in an extended reality context that incorporates information about physical location, orientation and dimension of ad units. Particular embodiments differentiate ad units located at the same location (latitude and longitude), but at different altitudes.

Some embodiments position an ad unit at different orientations at a given location. The parametric dimensionality of ad units may be reduced by assuming fixed orientations with respect to the gravity component. Some embodiments include metadata into the parametric definition of the ad unit that determines the type of ad allowed for display. Some embodiments may define ad units by their geometric size, projected size and/or rendered size.

In general, spatial mapping is the process whereby a physical location is onboarded into an XR environment. Particular embodiments described herein include mapping of space into standardized ad units.

An ad unit is defined by either two- or three-dimensional space. A given space can contain a single ad unit, or any number of permutations that are consistent with the standard sizes. Ad units can be defined by their geometric size (e.g., in cm² based on the size they occupy in the cartesian plane in two-dimensional space).

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

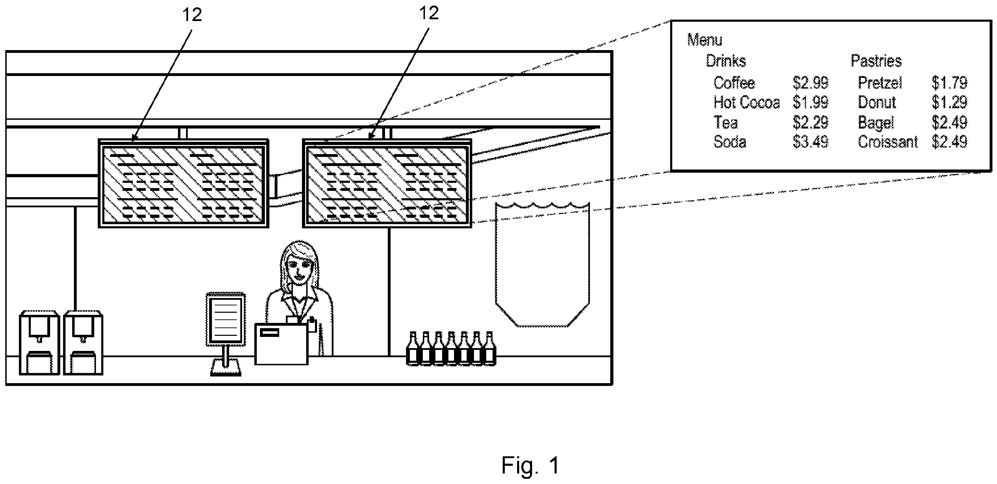

FIGURE 1 illustrates an example mapping of two flat surfaces into ad units. Particular embodiments may perform a spatial mapping of the illustrated retail location. As part of the spatial mapping, for example, each of the flat surface screens suspended from the ceiling above the checkout station may be identified as a space 12 to which virtual content may be overlayed.

In some embodiments, the virtual content may comprise advertising content. To market spaces 12, some embodiments may map space 12 to an ad unit, which can be identified with an ad unit identifier to identify space 12 within an advertising bidding system.

The illustrated example includes two equally sized spaces 12. In some embodiments the flat surface may divided into two or more smaller spaces 12 (e.g., multiple columns of content).

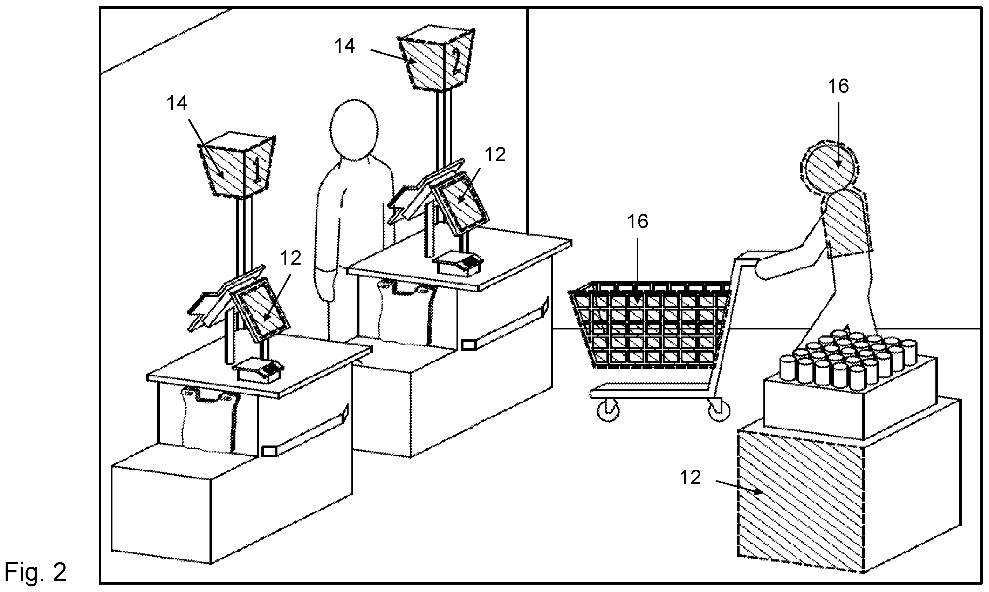

FIGURE 2 illustrates an example mapping of two and three dimensional surfaces into ad units. Spaces 12 are two-dimensional spaces for overlaying virtual content and spaces 14 are three-dimensional spaces for overlaying virtual content.

In addition to identifying spaces 12, 14 to which virtual content may be overlayed, some embodiments may identify spaces to which virtual content should not be overlayed. For example, particular embodiments may identify spaces 16, such as another shopper or a shopping cart, to which virtual content should not be overlayed. Thus, spaces 12 and 14 may have digital advertising enabled, while spaces 16 may be blocked from being identified as ad units (e.g., ineligible for displaying virtual content).

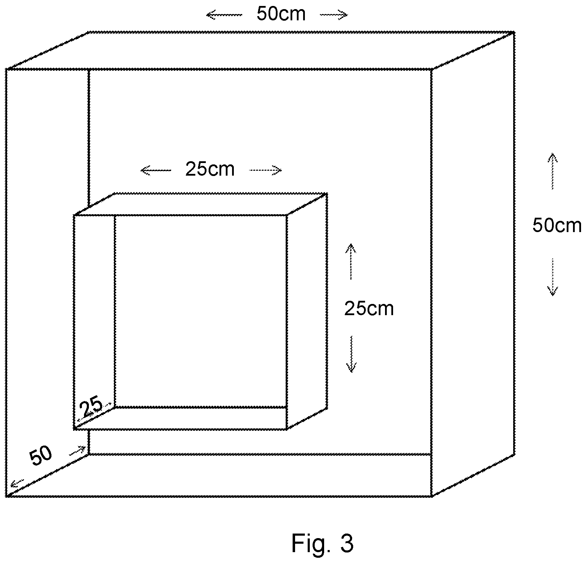

A given ad unit definition may includes a depth dimension. An example mapping of a location into standardized, three dimensional units is illustrated in FIGURE 3.

FIGURE 3 illustrates two three-dimensional cubes that may be defined as ad units. In some embodiments, ad units may be defined by their geometric size (e.g., cm³), which is the size they occupy in the cartesian space, regardless of the perspective or distance they are viewed. Even ad units that will be projected in two dimensions can be defined in three-dimensional space, assigning a unitary value to the depth dimension.

Ad units may be defined by their projected size (e.g., cm³), which depends on the perspective and distance viewed (e.g., the same ad units will appear smaller from far away than from a close distance). Ad units may be defined by their rendered size (e.g., in pixels), which is the projected size, but may depend on the resolution of the XR device.

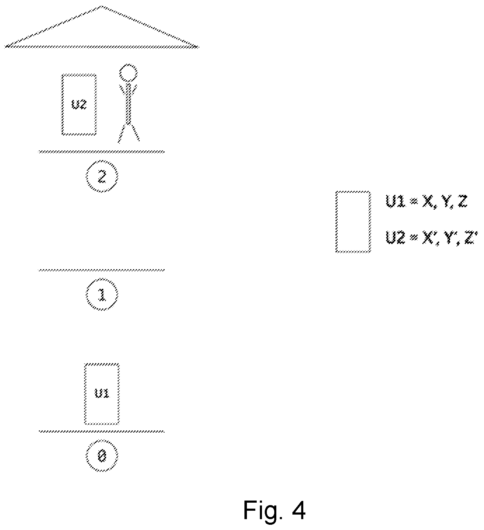

FIGURE 4 is a block diagram illustrating two ad units on different floors of a structure. The example illustrates the importance of altitude information for XR advertising. Altitude information is beneficial even in two-dimensional advertisement inventory. For example, illustrated ad unit U1 and ad unit U2 exist on the same position on the map (e.g., they have the same latitude and longitude), but they are on different floors of the illustrated structure (e.g., they have different altitudes).

In general, particular embodiments include and define standard units within a spatial map of the environment. This facilitates digital advertising in XR, because otherwise pricing and selling inventory is difficult. In particular embodiments, ad units exist in three dimensions and possess different qualities (e.g., video, still, and interactive). Particular embodiments pair environmental, semantic, and contextual understanding with artificial intelligence to recommend optimal dimensions, location, and orientation in terms of either centimeters or pixels for each ad unit.

More specifically, spatial mapping scans and maps the real environment into a virtual representation of the environment and uses the representation to place two- or three-dimensional ad units within the map. Spatial mapping is performed through computational geometry and computer vision using sensors present in the XR device (typically cameras and inertial sensors) to map the environment while simultaneously keeping track of the XR device's location within it. With a map of the environment and data on the XR device's pose (i.e., location and orientation), particular embodiments derive possible locations, sizes, and placements for ad units in the environment.

Spatial understanding is more complicated than spatial mapping in that it requires the ability to differentiate among different surfaces. For example, distinguishing a floor from a table or a TV screen from a wall is important. The distinction is needed to determine what spaces in the environment might reasonably contain ad units. However, identifying optimal spaces and surfaces where ad units could be projected is insufficient for XR advertising. Surface data does not have semantic meaning or interpretation associated with it. Current spatial mapping approaches are unable to recommend which surfaces are viable for ad unit placement.

Particular embodiments described herein include spatial mapping that infers a scene's semantics and context and incorporates information about the class and semantics of objects within the map. Take for example, two flat, octagonal surfaces of equal dimension, where one is a blank poster board inside a supermarket, and the other is a stop sign at a traffic intersection. Because current spatial mapping techniques do not incorporate semantic and contextual information, they might identify both surfaces as possible ad units. While the blank poster board may be ideal for ad unit placement, placing an ad over a traffic sign is potentially hazardous. Particular embodiments incorporate contextual information from nearby objects in the environment to solve this problem.

As the above example demonstrates, knowing a scene's semantics is useful for creating more accurate spatial maps. It can also help to understand whether dynamic changes within a mapping are either permanent or temporary anomalies. Just as information about the mapped environment can improve object detection, a dynamic process that measures changes in the orientation and/or pose of objects within the spatial mapping improves detection accuracy.

Classifying objects within the spatial mapping facilitates the automatic inclusion and/or exclusion of specific object spaces or surfaces from the ad unit creation process. Numerous surfaces are inappropriate for ad units. For example, it is inappropriate and dangerous to create ad units over human faces, traffic signs, and physical infrastructure such as roads, sidewalks, and pedestrian crossings. Incorporating semantic information enables the ad unit creation process to follow a consistent set of rules around automatic inclusion and/or exclusion of various surfaces.

Semantic mapping may be used for ad unit placement. Particular embodiments combine object detection and spatial mapping together for the automatic creation and placement of ad units. Mapping may be performed through different mapping algorithms using simultaneous localization and mapping (SLAM) frameworks. While a neural network, as an object detection model, may be used to provide semantic information of identified shapes (objects) in the map. With this information, particular embodiments identify the shape label *k*∈{1, 2, ..., *K*} of an object. After estimating *k,* its shape *S*(*k*) can be read from a database of shapes.

Semantic spatial mapping provides evidence of objects in the scene *Zₜ* in the form of a likelihood score for their presence, shape *k* and pose *g*. Some embodiments may use accumulated evidence over time and the likelihood at each instant combined into a posterior estimate of an object pose and identity given the current state of the XR device within the map *Xₜ* and data *y^{t}*, which can be visual-inertial data, depth or location measurements.$p \left(zt=\left\{k, g\right\}t | Xt, {y}^{t}\right)$ is interpreted as the probability of a scene Z given by shape *k* with pose g being an object given map data *X* and other data *y.*

After obtaining the semantic map, some embodiments identify possible locations of ad units. Ad unit opportunities may exist in empty spaces of a particular size or surfaces within the map, or in whitelisted spaces or objects, while avoiding blacklisted spaces or objects.

Whitelisting and blacklisting ad units can be done manually or automatically. Manual white/blacklisting can be done by ad custodians (e.g., owners of physical spaces on which XR advertisements may be placed), who are able to mark or segment different spaces in the XR environment to define geometric areas or volumes in the environment to allow or encourage ad unit creations in such spaces (whitelist) or to block the creation of ad units in such spaces (blacklist).

The manual process of masking spaces for white or blacklisting may be performed in different ways. In some embodiments, the masking is performed online using an XR device within the environment and using gestures or other tagging tools, for example, to tag points, surfaces or volumes to define the boundaries of a space within it.

In some embodiments, the masking is performed offline using a 3D representation of the environment to mark boundaries of locations marked for white or blacklisting. For example, a space custodian may use a laptop to visualize a 3D representation of the environment and mask locations for white or blacklisting. In this example, a map of the environment is available in advance.

In particular embodiments, automatic white/blacklisting is performed based on the shape label of identified ad unit opportunities on the semantic map. The estimated evidence of objects in the scene can be linked to the inventory to estimate the correct ad unit placement for whitelisted or allowed objects based on their shape label (*k*) and pose (*g*) and to identify blacklisted objects in the scene to avoid placing ad units. The shape of identified ad unit opportunities S(k) may be read from a database of shapes and the correct ad unit size and orientation can be identified.

Some embodiments assign and display ad units on the spatial map as ad unit opportunities. After the spaces on the semantic spatial map have been whitelisted (either manually beforehand or automatically during the mapping process), they may be automatically identified as ad unit opportunities and a standardized ad unit can be assigned to the specific space based on its dimensions. If during the mapping process, other non-whitelisted (nor blacklisted) spaces are identified as potential spaces for hosting an ad unit, such spaces may be identified as an ad unit opportunity, depending on who owns the physical space, and if the owner allows ad unit placement on such space. Blacklisted spaces are blocked and automatically excluded for consideration as ad unit opportunities.

After ad unit opportunities have been identified within the map, they may be automatically monitored for ad placement. Ad placement happens as a visual overlay or projection of virtual content over the projected physical space corresponding to the ad unit opportunity in the map. To facilitate ad placement, first ad units are mapped and sized where they will be projected. The sizing may be according to their geometric size or their projective size.

Some embodiments include mapping of ad units in extended reality. Ad units may be mapped in the XR environment, e.g. a spatial map, according to their two- or three-dimensional geometric size. A way to standardize ad units regardless their dimensionality order is to treat all add units as three-dimensional and assigning a unitary value to the depth representation of add units projected to surfaces. Ad units may thus have a parametric size defined by width (W), height (H) and depth (D).

Moreover, ad units may have a pose (location and orientation in the map). Pose might be defined using cartesian coordinates system with an arbitrary origin defined by the application that hosts the map (e.g., main entrance of a building, geometric center of a city, etc.). The arbitrary origin could be standardized in a global level and the location of the ad unit can be defined in a geographic coordinate system (ISO 6709) using longitude (x), latitude (y) and altitude (z) as their location representation. Therefore, an arbitrary point of the ad unit (e.g., the center of mass) can be defined as the local unit origin and therefore the location of the ad unit defined by the longitude, latitude and altitude of this point (in geographic coordinates), or the x, y, z cartesian coordinates of the point relative to the map origin otherwise.

The second element of the pose, the orientation, can be represented by the clockwise rotation of the object relative to the arbitrary ad unit origin (e.g., its center of mass), which is given by the roll (φ), pitch (θ) and yaw (ψ) angles.

Therefore, ad units can be represented as a volumetric object defined by a nine-dimensional vector of three three-dimensional components. Translational, rotational and size. The size component is composed by the Euclidean volumetric representation (W, H, D) of the object in cartesian coordinates in reference to the body frame. The translational component describes the specific geographic location (latitude, longitude, altitude) or cartesian location (x, y, z) of the body frame origin in reference (e.g., center of mass) to the inertial frame. The orientation component is defined by the specific orientation of the body frame with respect to the inertial frame (φ, θ, ψ).

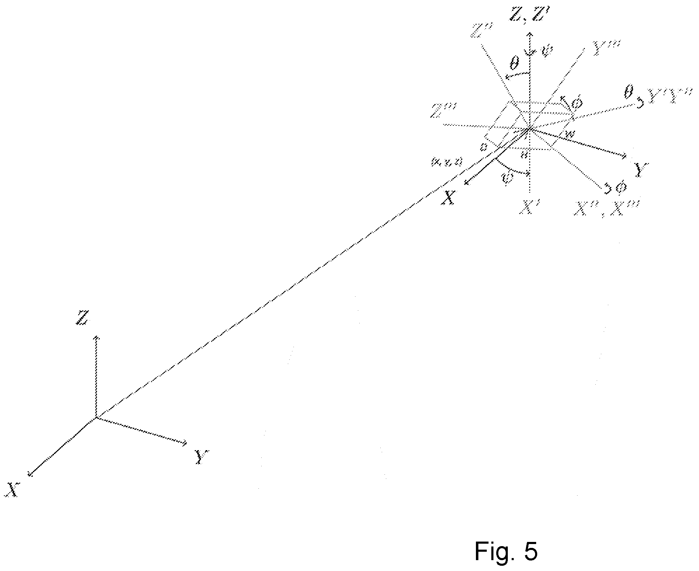

Therefore, and ad unit can be represented as a nine-dimensional vector in the spatial map. Translation t ∈ R³, orientation o ε [0, 2π)³ and size s ∈ R³. ${AU}^{G} = \left[x, y, z, φ, θ, ψ, W, H, D\right]$ An example is illustrated in FIGURE 5.

FIGURE 5 illustrates a parametric definition of ad units in a spatial map, according to some embodiments. The inertial frame origin (*X, Y, Z*) can be defined either at the geographic origin or at any other arbitrary origin of the map. The body frame origin (*X*‴*, Y*‴*, Z*‴) can be defined at the center of mass of the ad unit, where the dimensions (*W, H, D*) of the ad unit align with the frame axis, at an specific orientation (*φ, θ, ψ*) located at a point (*x, y, z*) with respect to the inertial frame origin.

Some embodiments perform ad unit orientation parametrization using quaternions. Using quaternions facilitates ad unit rotation operations that avoid the problem of gimbal lock present on Euler angle representations, which prevents measuring orientation when the pitch angle approaches +/- 90 degrees. The orientation can be represented as the quaternion vector (q^{b}i) to represent the three-dimensional rotation relative to the reference coordinate system (i.e., the orientation of the object from the inertial frame (earth-fixed coordinate frame) to the body frame (aligned with the ad unit body dimension frame)). ${{q}^{b}}_{i} = {\left(a b c d\right)}^{T} .$ where *a* represents the amount of rotation around the Euler angle of rotation and *b, c, d* are the vector about which rotation should be performed in the x, y, and z axis.

An advantage of representing orientation using quaternions, is to avoid gimbal lock problem present in Euler angle or angle-axis representation and smooth interpolation between two rotations. However, they are harder to visualize in a 3D space and computations include imaginary numbers.

The ad unit parametric representation using quaternions is then defined as: ${AU}^{G} = \left[x, y, z, a, b, c, d, W, H, D\right]$

Some embodiments may optimize the parametric representation of ad units by reducing vector dimensionality and applying assumptions or constrains when defining ad units in the spatial map. Some embodiments perform ad unit orientation parametrization assuming gravity constrained rotations.

For example, a simplification for parametrizing ad units, instead of using the quaternion technique, may assume that ad units are defined in a globally consistent orientation reference (gravity). Ad units are defined parallel to walls or vertical surfaces to be viewed from a standing up perspective. This is practical, because in most cases the ad unit orientation will be constrained with the "bottom" plane pointing toward the gravity direction.

The gravity constraint reduces pose space to four dimensions instead of six, which reduces the full spatial representation from nine to seven elements: Translation t ∈ R³, rotation around gravity (yaw) *ψ* ∈ [0, 2π) and size s ∈ R³. ${AU}^{G} = \left[x, y, z, ψ, W, H, D\right]$

Some embodiments include meta-information with ad units. Besides the parametric representation of ad units (AU^{G}) containing information about the ad unit location, orientation and size, ad units may contain extra information about the type of content allowed in them.

For example, the meta-information may include: the type of media (e.g., still projections, video or interactive content); type of advertisement allowed (e.g., for different types of industries like gaming, fashion, consumer electronics, food, any type, etc.); target audiences (e.g., specific audiences or general public); Specific brands (e.g., any brand belonging to a particular industry, or just specific brands, e.g., brands owning the "location" of certain ad units); and other type of metadata identifying the type of content that can be projected to the ad unit in question.

In some embodiments, metadata to ad units may be defined automatically using the just in time bidding process and determining an audience type for specific ad units.

Some embodiments project ad units in extended reality. After ad unit mapping, advertisement information contained in the ad units may be displayed in the XR device. To render the advertisement on the device, the ad unit is projected to the XR device reference frame. Information about the projections may be useful for representing the ad units for pricing.

Currently, pricing of ad units are defined by the size of the ad units in pixels, regardless of the perspective on which they are viewed. In an XR environment, this is no longer the case. The perception of ad units can be different when perceived from up close or from far away, or different if perceived from directly in front or from an angle, especially for flat ad units. Thus, an advantage of some embodiments is defining ad units according to their projective representation (instead of geometric one).

Using projective mapping, XR ad units occupy a certain size of the XR device display depending on the perspective on which they are viewed. The size in the XR display depends on the relative pose of the observer to the specific ad unit's geometric location (e.g., the same ad units will appear smaller from far away than from a close distance). The size they appear to occupy might be different at different angles. Projected representation reduces ad unit dimensionality by one, because the three-dimensional representation of ad units gets projected into a two-dimensional "display" plane. Projected size depends on the perspective, but not on the resolution of the display.

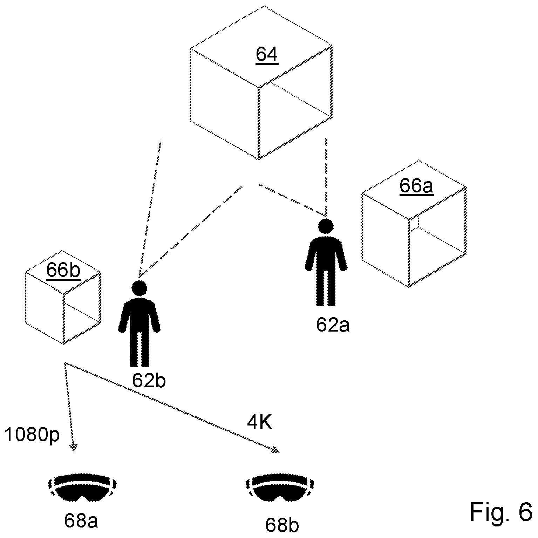

After the ad unit is projected to the view plane, it is rendered according to the display on which it will be viewed. The XR ad units occupy certain size of the XR device display depending on the projected size mapping. They are projected and rendered in 2D regardless of their dimensionality order. For any given relative pose of an XR ad unit of a given geometric size, the number of pixels used for displaying the ad unit may vary depending on the resolution of the display. Given this, an ad unit of a given geometric size and relative pose to two different XR devices with different resolutions may have the same rendered size in centimeters, but a different rendered size in pixels. An example is illustrated in FIGURE 6.

FIGURE 6 illustrates a three-dimensional ad unit as viewed by different users and different devices, according to a particular embodiment. Users 62 may view ad unit 64. Ad unit 64 may comprise a 25x25x25 cm ad unit, for example. In the illustrated XR environment, user 62a is closer than user 62b to ad unit 64. Accordingly, projected display 66a of ad unit 64 viewed by user 62a may be larger than projected display 66b of ad unit 64 viewed by user 62b. For example, user 62a may view a 5x5x8 cm projected display and user 62b may view a 1x5x5 projected display.

Furthermore, the rendered size may differ depending on the XR end user device. For example, a 1080p resolution XR end user device may render the projected display as 600x600 pixels. A 4K resolution XR end user device may render the projected display as 1200x1200 pixels.

In some embodiments, except for the end users that may walk physically through spaces during the spatial mapping process, the remaining components such as the spatial mapping components, ad unit identification and selection, etc., may be performed at the cloud.

In some embodiments and the spatial mapping and identification of ad units is performed up front. Later, when a user enters a physical location with the XR end user device, the XR user device may trigger an advertising opportunity at one of the previously identified ad units and the advertising content may be sent to the XR end user device.

In some embodiments the spatial mapping, identification of ad units, and advertising display all happen in real time together when the XR end user device enters a particular location. Whether particular steps described herein are performed at the XR end user device or a network node, such as an edge or cloud device, depends at the least in part on the processing power of each component.

An XR system may include one more XR end user devices and one or more network nodes, such as edge or cloud devices. Some example XR system components are described below.

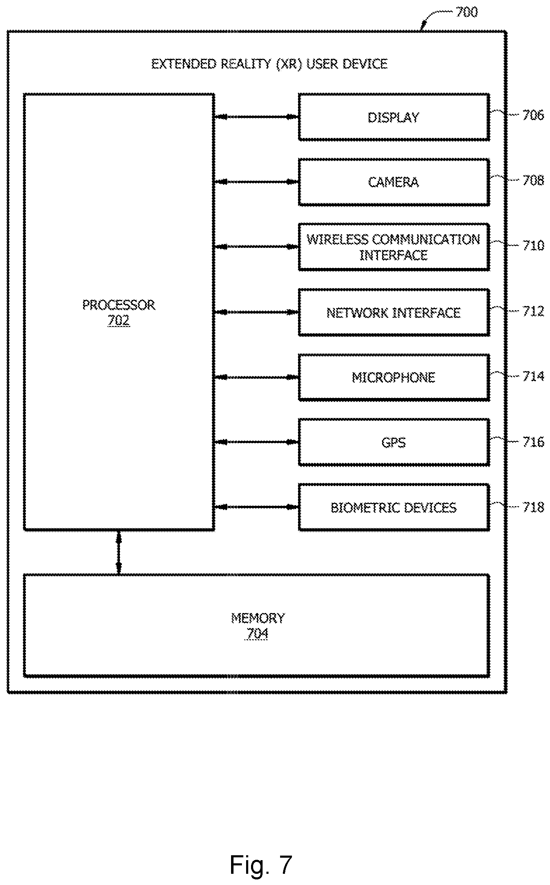

FIGURE 7 is a block diagram illustrating an example extended reality (XR) end user device. XR user device 700 may be configured to detect virtual content display opportunities and/or overlay virtual content, such as advertisements, according to any of the examples and embodiments described above. Examples of XR end user device 700 in operation are described with respect to FIGURES 1-6, 10 and 11.

XR end user device 700 comprises a one or more processors 702, a memory 704, and a display 706. Particular embodiments may include a camera 708, a wireless communication interface 710, a network interface 712, a microphone 714, a global position system (GPS) sensor 716, and/or one or more biometric devices 718. XR end user device 700 may be configured as shown or in any other suitable configuration. For example, XR end user device 700 may comprise one or more additional components and/or one or more shown components may be omitted.

Processor 702 comprises one or more CPU chips, logic units, cores (e.g., a multi-core processor), FPGAs, ASICs, or DSPs. Processor 702 is communicatively coupled to and in signal communication with memory 704, display 706, camera 708, wireless communication interface 710, network interface 712, microphone 714, GPS sensor 716, and biometric devices 718. Processor 302 is configured to receive and transmit electrical signals among one or more of memory 704, display 706, camera 708, wireless communication interface 710, network interface 712, microphone 714, GPS sensor 716, and biometric devices 718. The electrical signals are used to send and receive data (e.g., images captured from camera 708, virtual objects to display on display 706, etc.) and/or to control or communicate with other devices. For example, processor 702 transmits electrical signals to operate camera 708. Processor 702 may be operably coupled to one or more other devices (not shown).

Processor 702 is configured to process data and may be implemented in hardware or software. Processor 702 is configured to implement various instructions and logic rules, such as instructions and logic rules 220. For example, processor 702 is configured to display virtual objects on display 706, detect hand gestures, identify virtual objects selected by a detected hand gesture (e.g., identify virtual content display opportunities), and capture biometric information of a user via one or more of camera 708, microphone 714, and/or biometric devices 718. In an embodiment, the functions of processor 702 may be implemented using logic units, FPGAs, ASICs, DSPs, or any other suitable hardware.

Memory 704 comprises one or more disks, tape drives, or solid-state drives, and may be used as an over-flow data storage device, to store programs when such programs are selected for execution, and to store instructions and data that are read during program execution, such as instructions and logic rules 220. Memory 704 may be volatile or non-volatile and may comprise ROM, RAM, TCAM, DRAM, and SRAM. Memory 704 is operable to store, for example, instructions for performing the functions of XR end user device 700 described herein, and any other data or instructions.

Display 706 is configured to present visual information to a user in an augmented reality environment that overlays virtual or graphical objects onto tangible objects in a real scene in real-time. In an embodiment, display 706 is a wearable optical display configured to reflect projected images and enables a user to see through the display. For example, display 706 may comprise display units, lens, semi-transparent mirrors embedded in an eye glass structure, a visor structure, or a helmet structure. Examples of display units include, but are not limited to, a cathode ray tube (CRT) display, a liquid crystal display (LCD), a liquid crystal on silicon (LCOS) display, a light emitting diode (LED) display, an active matrix OLED (AMOLED), an organic LED (OLED) display, a projector display, or any other suitable type of display as would be appreciated by one of ordinary skill in the art upon viewing this disclosure. In another embodiment, display 706 is a graphical display on a user device. For example, the graphical display may be the display of a tablet or smart phone configured to display an augmented reality environment with virtual or graphical objects overlaid onto tangible objects in a real scene in real-time.

Examples of camera 708 include, but are not limited to, charge-coupled device (CCD) cameras and complementary metal-oxide semiconductor (CMOS) cameras. Camera 708 is configured to capture images of a wearer of XR end user device 700, such as user 102. Camera 708 may be configured to capture images continuously, at predetermined intervals, or on-demand. For example, camera 708 may be configured to receive a command from user 102 to capture an image. In another example, camera 708 is configured to continuously capture images to form a video stream. Camera 708 is communicably coupled to processor 702.

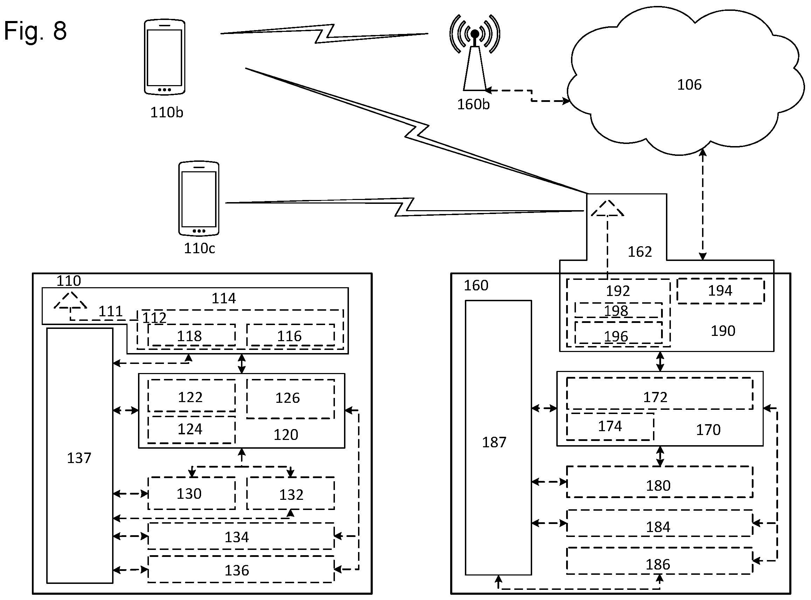

Examples of wireless communication interface 710 include, but are not limited to, a Bluetooth interface, an RFID interface, an NFC interface, a local area network (LAN) interface, a personal area network (PAN) interface, a wide area network (WAN) interface, a Wi-Fi interface, a ZigBee interface, or any other suitable wireless communication interface as would be appreciated by one of ordinary skill in the art upon viewing this disclosure. Wireless communication interface 710 is configured to facilitate processor 702 to communicating with other devices. For example, wireless communication interface 710 is configured to enable processor 702 to send and receive signals with other devices. Wireless communication interface 710 is configured to employ any suitable communication protocol. In some embodiments, wireless communication device 710 may comprise wireless device 110 described with respect to FIGURE 8.

Network interface 712 is configured to enable wired and/or wireless communications and to communicate data through a network, system, and/or domain. For example, network interface 712 is configured for communication with a modem, a switch, a router, a bridge, a server, or a client. Processor 702 is configured to receive data using network interface 712 from a network or a remote source, such as cloud storage device 110, institution 122, mobile device 112, etc.

Microphone 714 is configured to capture audio signals (e.g. voice signals or commands) from a user, such as user 102. Microphone 714 is configured to capture audio signals continuously, at predetermined intervals, or on-demand. Microphone 714 is communicably coupled to processor 702.

GPS sensor 716 is configured to capture and to provide geographical location information. For example, GPS sensor 716 is configured to provide a geographic location of a user, such as user 102, employing XR end user device 700. GPS sensor 716 may be configured to provide the geographic location information as a relative geographic location or an absolute geographic location. GPS sensor 716 may provide the geographic location information using geographic coordinates (i.e., longitude and latitude) or any other suitable coordinate system. GPS sensor 716 is communicably coupled to processor 702.

Examples of biometric devices 718 include, but are not limited to, retina scanners and fingerprint scanners. Biometric devices 718 are configured to capture information about a person's physical characteristics and to output a biometric signal based on captured information. A biometric signal is a signal that is uniquely linked to a person based on their physical characteristics. For example, biometric device 718 may be configured to perform a retinal scan of the user's eye and to generate a biometric signal for the user based on the retinal scan. As another example, a biometric device 718 is configured to perform a fingerprint scan of the user's finger and to generate a biometric signal for the user based on the fingerprint scan. Biometric device 718 is communicably coupled to processor 702.

FIGURE 8 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. Network nodes may also include edge and/or cloud devices.

A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 8, network node 160 includes processing circuitry 170, device readable medium 180, interface 190, auxiliary equipment 184, power source 186, power circuitry 187, and antenna 162. Although network node 160 illustrated in the example wireless network of FIGURE 8 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 8 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal. A wireless device may also refer to a mobile terminal as part of an IAB node.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 8. For simplicity, the wireless network of FIGURE 8 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

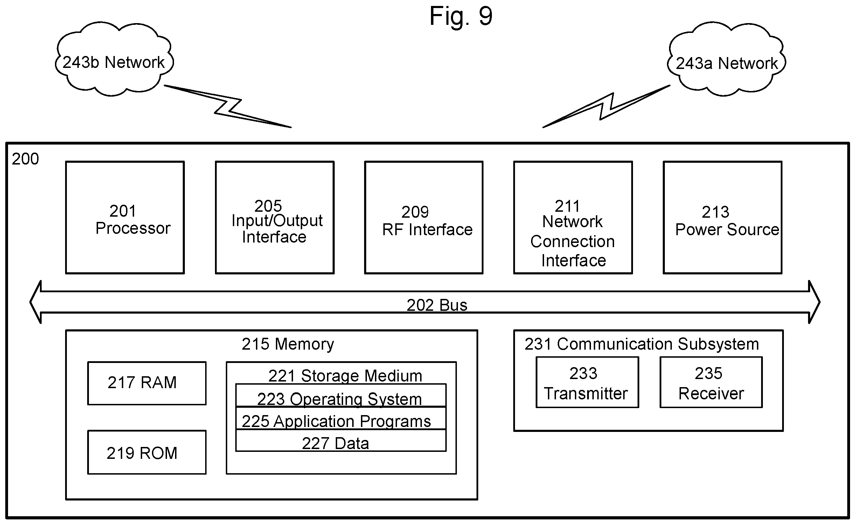

FIGURE 9 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 9, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 9 is a UE, the components discussed herein are equally applicable to a WD, and vice-versa.

In FIGURE 9, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may use all the components shown in FIGURE 9, or only a subset of the components. The level of integration between the components may vary from one UE to another UE. Further, certain UEs may contain multiple instances of a component, such as multiple processors, memories, transceivers, transmitters, receivers, etc.

In FIGURE 9, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 9, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 9, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

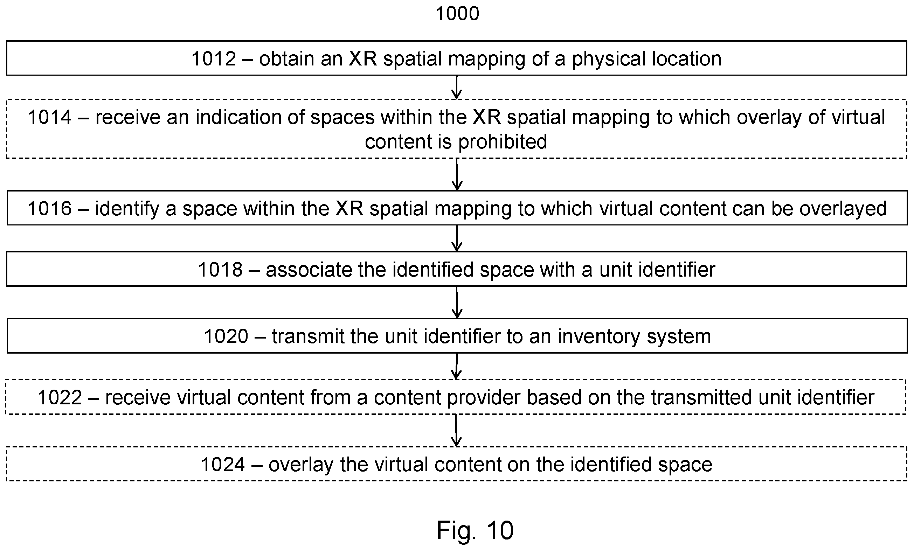

FIGURE 10 is a flowchart illustrating an example method in an XR system, according to certain embodiments. In particular embodiments, one or more steps of FIGURE 10 may be performed by an XR end user device described with respect to FIGURE 7 and/or a network node, such as an edge or cloud node, described with respect to FIGURE 8.

The method begins at step 1012, where the XR system obtains an XR spatial mapping of a physical location. The XR mapping may obtain the spatial mapping according to any of the embodiments and examples described above.

As one example, in some embodiments a network node may receive spatial mapping information from an XR end user device (e.g., XR end user device 700). The network node may use the received information to build a spatial map. In this example, the XR end user device may be referred to as a thin client that gathers information about the physical location, but the computationally intensive processing is performed at the network node.

As another example, in some embodiments the XR end user device may perform the spatial mapping and send the mapping to the network node.

At step 1014, the XR system may receive an indication of spaces within the XR spatial mapping to which overlay of virtual content is prohibited. For example, the XR system (the XR end user node, network node, or both) may receive blacklist and/or whitelist information from a custodian of the extended reality environment as described above.

In some embodiments, a custodian of the extended reality environment may use an XR user device in an online method to walk through the XR environment and tag spaces as whitelisted and/or blacklisted. In some embodiments, a spatial mapping preexists, and the custodian of the extended reality environment may use an offline method to access a representation of the extended reality environment and tag spaces as whitelisted and/or blacklisted. The blacklist and/or whitelist information may be used in step 1016.

At step 1016, the XR system identifies a space within the XR spatial mapping to which virtual content can be overlayed. In some embodiments, identifying the space within the XR spatial mapping to which virtual content can be overlayed comprises: identifying a surface on which virtual content can be overlayed; classifying the identified surface based on an identification of objects near the identified surface; and determining that the classification of the identified surface is a classification that is permitted to display virtual content. Examples of classification are described above.

In some embodiments, the XR system may determine that the identified space is not one of the indicated spaces within the XR spatial mapping to which overlay of virtual content is prohibited received in previous step 1014 (e.g., the identified space is not on a whitelist, or the identified space is on a blacklist).

At step 1018, the XR system associates the identified space with a unit identifier. In some embodiments, a unit identifier comprises a unique identifier for the identified space. The identifier is unique with respect to a system for managing an inventory of identified spaces.

For example, the XR system may turn the identified space into a marketable advertising space by creating an ad unit for the space. The ad unit may be identified by an advertising unit identifier (i.e., ad unit identifier). The advertising unit identifier may be used by advertising supply and or bidding platform to track the ad unit (e.g., the identified space).

In some embodiments, associating the identified space with the unit identifier comprises associating a geographical position of the space with the unit identifier. The geographical position of the space may include an altitude of the space.

In some embodiments, associating the identified space with the unit identifier comprises associating dimensions of the space with the unit identifier. The dimensions may represent the size of the space in physical space or represent the size of the space as viewed in perspective from a user location in the physical location. For example, the dimensions may be based on the user's distance from the space, the user's viewing angle of the space, focal length (e.g., amount of zoom), etc. More detail regarding dimensions and projections is described above with respect to FIGURES 3-6.

In some embodiments, associating the identified space with a unit identifier comprises associating at least one of a media type, a content type, and an audience type according to any of the embodiments and examples described above.

In some embodiments, the association as performed at an XR end user device. In some embodiments, the association as performed at a network node.

At step 1020, the XR system transmits the unit identifier to an inventory system so that the space associated with the unit identifier is available to providers of virtual content. For example, the unit identifier may comprise an advertising unit identifier transmitted to an advertising real time bidding (RTB) system.

In some embodiments, a network node may transmit the unit identifier to a supply side platform. In some embodiments, an XR end user device may transmit the unit identifier to a network node, which may forward the unit identifier to a supply side platform. In some embodiments, the XR end user device may be in direct communication with a supply side platform.

The steps above may be performed at an XR end user device or a network node, depending on the configuration of the XR system. In some embodiments, an XR end user device may be further configured to perform the following steps.

At step 1022, the XR device receives virtual content from a content provider based on the transmitted unit identifier. For example, an advertiser, after bidding on and winning the right to project content to the space in the XR environment identified by the unit identifier, may send the advertising content to the XR device. The advertiser may supply the virtual content directly or via a link to the content, such as a link to an advertising server.

At step 1024, the XR device overlays the virtual content on the identified space, according to any of the embodiments and examples described above.

Modifications, additions, or omissions may be made to method 1000 of FIGURE 10. Additionally, one or more steps in the method of FIGURE 10 may be performed in parallel or in any suitable order. As described above, in some embodiments, the spatial mapping, space identification, and unit identifier assignment may happen in advance, and triggering and display of the virtual content may happen at a later time. In some embodiments, the spatial mapping, space identification, unit identifier assignment and display of the virtual content may all happen in real time (e.g., as the XR end user device enters a particular location, such as a retail store).

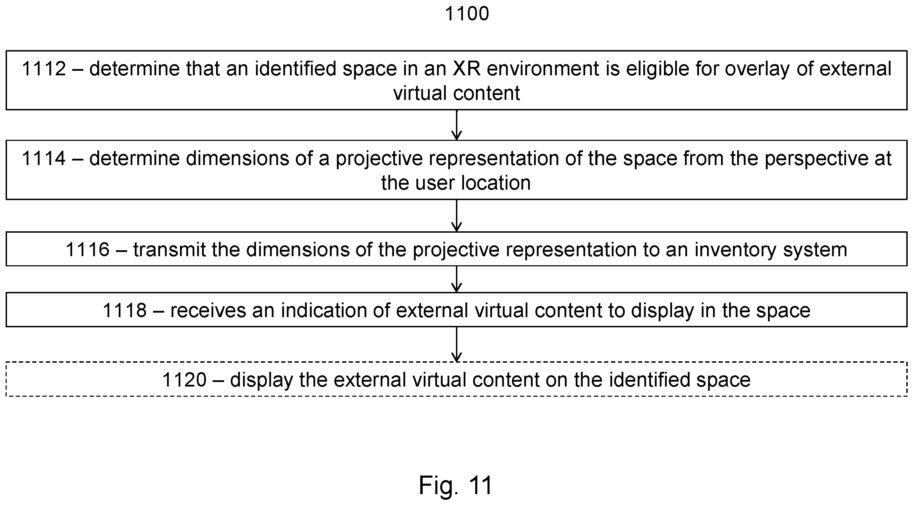

FIGURE 11 is a flowchart illustrating another example method in an XR system, according to certain embodiments. In particular embodiments, one or more steps of FIGURE 11 may be performed by an XR end user device described with respect to FIGURE 7 and/or a network node, such as an edge or cloud node, described with respect to FIGURE 8.

The method begins at step 1112, where the XR system determines that an identified space in an XR environment is eligible for overlay of external virtual content. The identified space is displayed by an XR user device from a perspective at a user location in the XR environment. An XR end user device or network node may determine that the identified space is eligible for overlay according to any of the embodiments and examples described above (e.g., as described with respect to steps 1012-1016 of FIGURE 10).

For example, a space may eligible for overlay when the space is determined to comprise a suitable surface for overlaying virtual content (e.g., a usable size, orientation, etc., depending on the application). For an advertising application, an eligible space may comprise a two or three-dimensional space with a flat surface of sufficient size to display advertising content. In some embodiments, eligibility may depend on a configured list of allowed spaces (e.g., a whitelist) and/or a configured list of prohibited spaces (e.g., a blacklist).

At step 1114, the XR system determines dimensions of a projective representation of the space from the perspective at the user location. For example, An XR end user device or network node may determine the dimensions according to any of the embodiments and examples described above (e.g., as described with respect to FIGURES 3-6). For example, the dimensions may be based on the user's distance from the space, the user's viewing angle of the space, focal length (e.g., amount of zoom), etc.

At step 1116, the XR system transmits the dimensions of the projective representation to an inventory system. For example, the XR end user device or network node may transmit the dimensions to an advertising real time bidding system. The real time bidding system may use the dimensions for pricing of the advertising inventory (e.g., smaller dimensions or lower resolution may translate to lower prices).

At step 1118, the XR system receives an indication of external virtual content to display in the space. The indication of external virtual content may comprise the virtual content itself, or a link to the virtual content.

The steps above may be performed at an XR end user device or a network node, depending on the configuration of the XR system. Embodiments comprising an XR end user device may be further configured to perform the following steps.

At step 1120, the XR end user device displays the external virtual content on the identified space, according to any of the embodiments and examples described above.

Modifications, additions, or omissions may be made to method 1100 of FIGURE 11. Additionally, one or more steps in the method of FIGURE 11 may be performed in parallel or in any suitable order.

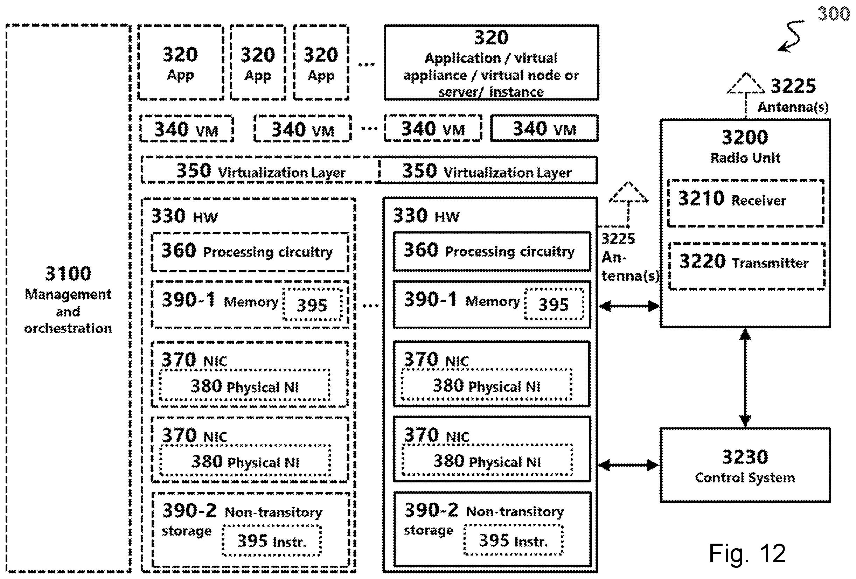

FIGURE 12 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 12, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 12.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).
- 3GPP: 3rd Generation Partnership Project
- 5G: 5th Generation
- 5GC: 5th Generation Core
- Ad-ID: A unique identifier for devices capable of showing digital advertising
- CDMA: Code Division Multiplexing Access
- CN: Core Network
- DSP: Demand Side Platform
- eNB: E-UTRAN NodeB
- ePDCCH: enhanced Physical Downlink Control Channel
- EPS: Evolved Packet System
- E-SMLC: evolved Serving Mobile Location Center
- E-UTRA: Evolved UTRA
- E-UTRAN: Evolved UTRAN
- FDD: Frequency Division Duplex
- GERAN: GSM EDGE Radio Access Network
- gNB: Base station in NR
- GNSS: Global Navigation Satellite System
- GSM: Global System for Mobile communication
- ID: Identity/Identifier
- IAB: Interactive Advertising Bureau
- IoT: Internet-of-Things
- LTE: Long-Term Evolution
- MSC: Mobile Switching Center
- NGC: Next Generation Core
- NG-RAN: Next Generation RAN
- NR: New Radio
- PCell: Primary Cell
- PDSCH: Physical Downlink Shared Channel
- PLMN: Public Land Mobile Network
- RAN: Radio Access Network
- RAT: Radio Access Technology
- ROAS: Return on Advertising Spend
- RNC: Radio Network Controller
- RTB: Real-Time Bidding
- SAE: System Architecture Evolution
- SCell: Secondary Cell
- SNR: Signal to Noise Ratio
- SSP: Supply Side Platform
- TDD: Time Division Duplex
- TTI: Transmission Time Interval
- UE: User Equipment
- UMTS: Universal Mobile Telecommunication System
- UTRA: Universal Terrestrial Radio Access
- UTRAN: Universal Terrestrial Radio Access Network
- WCDMA: Wide CDMA
- WLAN: Wide Local Area Network
- XR: Extended Reality

## Claims

1. A method performed by an extended reality (XR) system, the method comprising:
obtaining (1012) an XR spatial mapping of a physical location;
identifying (1016) a space within the XR spatial mapping to which virtual content can be overlayed;
associating (1018) the identified space with a unit identifier; and
transmitting (1020) the unit identifier to an inventory system so that the space associated with the unit identifier is available to providers of virtual content; wherein associating the identified space with the unit identifier comprises associating dimensions of the space with the unit identifier and wherein the dimensions represent the size of the space as viewed in perspective from a user location in the physical location.

2. The method of claim 1, wherein identifying the space within the XR spatial mapping to which virtual content can be overlayed comprises:
identifying a surface on which virtual content can be overlayed;
classifying the identified surface based on an identification of objects near the identified surface; and
determining that the classification of the identified surface is a classification that is permitted to display virtual content.

3. The method of any one of claims 1 or 2, wherein associating the identified space with the unit identifier comprises associating at least one of a media type, a content type, and an audience type.

4. The method of any one of claims 1-3, wherein the unit identifier comprises an advertising unit identifier and the inventory system comprises an advertising bidding system.

5. The method of any one of claims 1-3, wherein the XR system comprises a network node or wherein the XR system comprises an XR user device.

6. The method of claim 1 - 5, wherein the XR system comprises an XR user device and further comprising:
receiving (1022) virtual content from a content provider based on the transmitted unit identifier; and
overlaying (1024) the virtual content on the identified space.

7. An extended reality (XR) system (700, 160) comprising processing circuitry (702, 170) operable to:
obtain an XR spatial mapping of a physical location;
identify a space within the XR spatial mapping to which virtual content can be overlayed;
associate the identified space with a unit identifier; and
transmit the unit identifier to an inventory system so that the space associated with the unit identifier is available to providers of virtual content; wherein the processing circuitry is further operable to associate the identified space with the unit identifier by associating dimensions of the space with the unit identifier and wherein the dimensions represent the size of the space as viewed in perspective from a user location in the physical location.

8. The XR system of claim 7, wherein the processing circuitry operable to identify the space within the XR spatial mapping to which virtual content can be overlayed is operable to:
identify a surface on which virtual content can be overlayed;
classify the identified surface based on an identification of objects near the identified surface; and
determine that the classification of the identified surface is a classification that is permitted to display virtual content.

9. The XR system of any one of claims 7 or 8, the processing circuitry further operable to receive an indication of spaces within the XR spatial mapping to which overlay of virtual content is prohibited, and wherein identifying the space within the XR spatial mapping to which virtual content can be overlayed comprises determining that the identified space is not one of the indicated spaces within the XR spatial mapping to which overlay of virtual content is prohibited.

10. The XR system of any one of claims 7 - 9, wherein the processing circuity is operable to associate the identified space with the unit identifier by associating a geographical position of the space with the unit identifier.

11. The XR system of any one of claims 7 - 10 , wherein associating the identified space with a unit identifier comprises associating at least one of a media type, a content type, and an audience type.

12. The XR system of any one of claims 7 - 11, wherein the unit identifier comprises an advertising unit identifier and the inventory system comprises an advertising bidding system.

13. The XR system of any one of claims 7 - 12 , wherein the XR system comprises a network node (160) or wherein the XR system comprises an XR user device (700).

14. The XR system of claim 7 - 12 , wherein the XR system comprises an XR user device (700) and the processing circuitry further operable to:
receive virtual content from a content provider based on the transmitted unit identifier; and
overlay the virtual content on the identified space.

15. A computer program product configured to be operable to perform any one of the methods of claims 1-6.

16. A non-transitory computer readable medium storing computer readable program code, the computer readable program code operable, when executed by processing circuitry to perform any one of the methods of claims 1-6.

## Patentansprüche

1. Verfahren, das von einem System für erweiterte Realität (XR) durchgeführt wird, wobei das Verfahren Folgendes umfasst:
Erhalten (1012) einer räumlichen XR-Kartierung eines physischen Standorts;
Identifizieren (1016) eines Raums innerhalb der räumlichen XR-Kartierung, in dem virtueller Inhalt eingeblendet werden kann;
Zuordnen (1018) des identifizierten Raums zu einer Einheitenkennung; und
Senden (1020) der Einheitenkennung an ein Inventarsystem, sodass der der Einheitenkennung zugeordnete Raum für Anbieter von virtuellem Inhalt verfügbar ist; wobei das Zuordnen des identifizierten Raums zu der Einheitenkennung Zuordnen von Abmessungen des Raums zu der Einheitenkennung umfasst und wobei die Abmessungen die Größe des Raums aus der Perspektive von einem Benutzerstandort an dem physischen Standort betrachtet darstellen.

2. Verfahren nach Anspruch 1, wobei das Identifizieren des Raums innerhalb der räumlichen XR-Kartierung, in dem virtueller Inhalt eingeblendet werden kann, Folgendes umfasst:
Identifizieren einer Oberfläche, auf der virtueller Inhalt eingeblendet werden kann;
Klassifizieren der identifizierten Oberfläche basierend auf einer Identifizierung von Objekten in der Nähe der identifizierten Oberfläche; und
Bestimmen, dass die Klassifizierung der identifizierten Oberfläche eine Klassifizierung ist, die das Anzeigen von virtuellem Inhalt zulässt.

3. Verfahren nach einem der Ansprüche 1 oder 2, wobei das Zuordnen des identifizierten Raums zu der Einheitenkennung Zuordnen mindestens eines von einem Medientyp, einem Inhaltstyp und einem Zielgruppentyp umfasst.

4. Verfahren nach einem der Ansprüche 1-3, wobei die Einheitenkennung eine Werbeeinheitenkennung umfasst und das Inventarsystem ein Werbegebotssystem umfasst.

5. Verfahren nach einem der Ansprüche 1-3, wobei das XR-System einen Netzwerkknoten umfasst oder wobei das XR-System eine XR-Benutzervorrichtung umfasst.

6. Verfahren nach Anspruch 1-5, wobei das XR-System eine XR-Benutzervorrichtung umfasst, und ferner Folgendes umfassend:
Empfangen (1022) von virtuellem Inhalt von einem Inhaltsanbieter basierend auf der gesendeten Einheitenkennung; und
Einblenden (1024) des virtuellen Inhalts in dem identifizierten Raum.

7. System (700, 160) für erweiterte Realität (XR), umfassend Verarbeitungsschaltungsanordnung (702, 170), die zu Folgendem ausgelegt ist:
Erhalten einer räumlichen XR-Kartierung eines physischen Standorts;
Identifizieren eines Raums innerhalb der räumlichen XR-Kartierung, in dem virtueller Inhalt eingeblendet werden kann;
Zuordnen des identifizierten Raums zu einer Einheitenkennung; und
Senden der Einheitenkennung an ein Inventarsystem, sodass der der Einheitenkennung zugeordnete Raum für Anbieter von virtuellem Inhalt verfügbar ist; wobei die Verarbeitungsschaltungsanordnung ferner dazu ausgelegt ist, den identifizierten Raum der Einheitenkennung durch Zuordnen von Abmessungen des Raums zu der Einheitenkennung zuzuordnen, und wobei die Abmessungen die Größe des Raums aus der Perspektive von einem Benutzerstandort an dem physischen Standort betrachtet darstellen.

8. XR-System nach Anspruch 7, wobei die Verarbeitungsschaltungsanordnung, die dazu ausgelegt ist, den Raum innerhalb der räumlichen XR-Kartierung zu identifizieren, in dem virtueller Inhalt eingeblendet werden kann, zu Folgendem ausgelegt ist:
Identifizieren einer Oberfläche, auf der virtueller Inhalt eingeblendet werden kann;
Klassifizieren der identifizierten Oberfläche basierend auf einer Identifizierung von Objekten in der Nähe der identifizierten Oberfläche; und
Bestimmen, dass die Klassifizierung der identifizierten Oberfläche eine Klassifizierung ist, die das Anzeigen von virtuellem Inhalt zulässt.

9. XR-System nach Anspruch 7 oder 8, wobei die Verarbeitungsschaltungsanordnung ferner dazu ausgelegt ist, eine Angabe von Räumen innerhalb der räumlichen XR-Kartierung zu empfangen, in denen Einblendung von virtuellem Inhalt verboten ist, und wobei das Identifizieren des Raums innerhalb der räumlichen XR-Kartierung, in dem virtueller Inhalt eingeblendet werden kann, Bestimmen umfasst, dass der identifizierte Raum nicht einer der angegebenen Räume innerhalb der räumlichen XR-Kartierung ist, in denen Einblendung von virtuellem Inhalt verboten ist.

10. XR-System nach einem der Ansprüche 7-9, wobei die Verarbeitungsschaltungsanordnung dazu ausgelegt ist, den identifizierten Raum der Einheitenkennung durch Zuordnen einer geografischen Position des Raums zu der Einheitenkennung zuzuordnen.

11. XR-System nach einem der Ansprüche 7-10, wobei das Zuordnen des identifizierten Raums zu einer Einheitenkennung Zuordnen mindestens eines von einem Medientyp, einem Inhaltstyp und einem Zielgruppentyp umfasst.

12. XR-System nach einem der Ansprüche 7-11, wobei die Einheitenkennung eine Werbeeinheitenkennung umfasst und das Inventarsystem ein Werbegebotssystem umfasst.

13. XR-System nach einem der Ansprüche 7-12, wobei das XR-System einen Netzwerkknoten (160) umfasst oder wobei das XR-System eine XR-Benutzervorrichtung (700) umfasst.

14. XR-System nach Anspruch 7-12, wobei das XR-System eine XR-Benutzervorrichtung (700) umfasst und die Verarbeitungsschaltungsanordnung ferner zu Folgendem ausgelegt ist:
Empfangen von virtuellem Inhalt von einem Inhaltsanbieter basierend auf der gesendeten Einheitenkennung; und
Einblenden des virtuellen Inhalts in dem identifizierten Raum.

15. Computerprogrammprodukt, das so konfiguriert ist, dass es zum Durchführen eines der Verfahren nach Anspruch 1-6 ausgelegt ist.

16. Nicht-transitorisches computerlesbares Medium, das computerlesbaren Programmcode speichert, wobei der computerlesbare Programmcode bei Ausführung durch Verarbeitungsschaltungsanordnung zum Durchführen eines der Verfahren nach Anspruch 1-6 ausgelegt ist.

## Revendications

1. Procédé réalisé par un système de réalité étendue (XR), le procédé comprenant :
l'obtention (1012) d'une cartographie spatiale XR d'un emplacement physique ;
l'identification (1016) d'un espace à l'intérieur de la cartographie spatiale XR sur lequel un contenu virtuel peut être superposé ;
l'association (1018) de l'espace identifié à un identifiant d'unité ; et
la transmission (1020) de l'identifiant d'unité à un système d'inventaire de sorte que l'espace associé à l'identifiant d'unité soit disponible pour des fournisseurs de contenus virtuels ; dans lequel l'association de l'espace identifié à l'identifiant d'unité comprend l'association de dimensions de l'espace à l'identifiant d'unité et dans lequel les dimensions représentent la taille de l'espace en vue en perspective depuis un emplacement d'utilisateur dans l'emplacement physique.

2. Procédé selon la revendication 1, dans lequel l'identification de l'espace à l'intérieur de la cartographie spatiale XR sur lequel un contenu virtuel peut être superposé comprend :
l'identification d'une surface sur laquelle un contenu virtuel peut être superposé ;
la classification de la surface identifiée sur la base d'une identification d'objets à proximité de la surface identifiée ; et
la détermination que la classification de la surface identifiée est une classification qui est permise pour afficher un contenu virtuel.

3. Procédé selon l'une quelconque des revendications 1 et 2, dans lequel l'association de l'espace identifié à l'identifiant d'unité comprend l'association d'au moins l'un parmi un type de média, un type de contenu et un type de public.

4. Procédé selon l'une quelconque des revendications 1 à 3, dans lequel l'identifiant d'unité comprend un identifiant d'unité de publicité et le système d'inventaire comprend un système d'adjudication de publicité.

5. Procédé selon l'une quelconque des revendications 1 à 3, dans lequel le système XR au comprend un nœud de réseau ou dans lequel le système XR comprend un dispositif utilisateur XR.

6. Procédé selon l'une quelconque des revendications 1 à 5, dans lequel le système XR comprend un dispositif utilisateur XR et comprenant en outre :
la réception (1022) d'un contenu virtuel depuis un fournisseur de contenus sur la base de l'identifiant d'unité transmis ; et
la superposition (1024) du contenu virtuel sur l'espace identifié.

7. Système de réalité étendue (XR) (700, 160) comprenant une circuiterie de traitement (702, 170) exploitable pour :
obtenir une cartographie spatiale XR d'un emplacement physique ;
identifier un espace à l'intérieur de la cartographie spatiale XR sur lequel un contenu virtuel peut être superposé ;
associer l'espace identifié à un identifiant d'unité ; et
transmettre l'identifiant d'unité à un système d'inventaire de sorte que l'espace associé à l'identifiant d'unité soit disponible pour des fournisseurs de contenus virtuels ; dans lequel la circuiterie de traitement est en outre exploitable pour associer l'espace identifié à l'identifiant d'unité par l'association de dimensions de l'espace à l'identifiant d'unité et dans lequel les dimensions représentent la taille de l'espace en vue en perspective depuis un emplacement d'utilisateur dans l'emplacement physique.

8. Système XR selon la revendication 7, dans lequel la circuiterie de traitement exploitable pour identifier l'espace à l'intérieur de la cartographie spatiale XR sur lequel un contenu virtuel peut être superposé est exploitable pour :
identifier une surface sur laquelle un contenu virtuel peut être superposé ;
classifier la surface identifiée sur la base d'une identification d'objets à proximité de la surface identifiée ; et
déterminer que la classification de la surface identifiée est une classification qui est permise pour afficher un contenu virtuel.

9. Système XR selon l'une quelconque des revendications 7 et 8, la circuiterie de traitement étant en outre exploitable pour recevoir une indication d'espaces à l'intérieur de la cartographie spatiale XR sur lesquels une superposition de contenu virtuel est interdite, et dans lequel l'identification de l'espace à l'intérieur de la cartographie spatiale XR sur lequel un contenu virtuel peut être superposé comprend la détermination que l'espace identifié n'est pas l'un des espaces indiqués à l'intérieur de la cartographie spatiale XR sur lesquels une superposition de contenu virtuel est interdite.

10. Système XR selon l'une quelconque des revendications 7 à 9, dans lequel la circuiterie de traitement est exploitable pour associer l'espace identifié à l'identifiant d'unité par l'association d'une position géographique de l'espace à l'identifiant d'unité.

11. Système XR selon l'une quelconque des revendications 7 à 10, dans lequel l'association de l'espace identifié à un identifiant d'unité comprend l'association d'au moins l'un parmi un type de média, un type de contenu et un type de public.

12. Système XR selon l'une quelconque des revendications 7 à 11, dans lequel l'identifiant d'unité comprend un identifiant d'unité de publicité et le système d'inventaire comprend un système d'adjudication de publicité.

13. Système XR selon l'une quelconque des revendications 7 à 12, dans lequel le système XR au comprend un nœud de réseau (160) ou dans lequel le système XR comprend un dispositif utilisateur XR (700).

14. Système XR selon l'une quelconque des revendications 7 à 12, dans lequel le système XR comprend un dispositif utilisateur XR (700) et la circuiterie de traitement est en outre exploitable pour :
recevoir un contenu virtuel depuis un fournisseur de contenus sur la base de l'identifiant d'unité transmis ; et
superposer le contenu virtuel sur l'espace identifié.

15. Produit de programme informatique configuré pour être exploitable pour réaliser l'un quelconque des procédés selon les revendications 1 à 6.

16. Support non transitoire lisible par ordinateur stockant un code de programme lisible par ordinateur, le code de programme lisible par ordinateur, lorsqu'il est exécuté par une circuiterie de traitement, étant exploitable pour réaliser l'un quelconque des procédés selon les revendications 1 à 6.
